(19) Europäisches Patentamt
European Patent Office
Office européen des brevets

(11) EP 4 050 141 B1

(12) EUROPEAN PATENT SPECIFICATION

(45) Date of publication and mention
of the grant of the patent:
**01.01.2025 Bulletin 2025/01**

(51) International Patent Classification (IPC):
**D04B 21/10** $^{(2006.01)}$   **A41F 1/04** $^{(2006.01)}$

(21) Application number: **20914088.8**

(52) Cooperative Patent Classification (CPC):
**D04B 21/10; A01F 2015/0745; D10B 2403/02411;
D10B 2505/10; D10B 2507/02**

(22) Date of filing: **26.05.2020**

(86) International application number:
**PCT/CN2020/092204**

(87) International publication number:
**WO 2021/143002 (22.07.2021 Gazette 2021/29)**

(54) **WARP INSERTED WARP KNITTED CHAIN STRUCTURE FOR KNITTED BALING NET, AND BALE NET WRAP USING SAME**

GEWIRKTE KETTMASCHENSTRUKTUR MIT KETTFADENEINLAGE FÜR EIN GEWIRKTES VERPACKUNGSNETZ, UND DAMIT AUSGERÜSTETES BALLENNETZ

STRUCTURE À CHAÎNE TRICOTÉE À MAILLES JÉTÉES AVEC INSERTION EN CHAÎNE ET POUR UN FILET TRICOTÉ D'EMBALLAGE, ET UN FILET D'EMBALLAGE L'UTILISANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.01.2020 CN 202010029976**

(43) Date of publication of application:
**31.08.2022 Bulletin 2022/35**

(73) Proprietor: **Changzhou Xinhui Netting Co., Ltd.
Jintan Economic Develpoment Zone
Changzhou, Jiangsu 213200 (CN)**

(72) Inventor: **XU, Xiaohui
hangzhou, Jiangsu 213200 (CN)**

(74) Representative: **karo IP
Patentanwälte PartG mbB
Steinstraße 16-18
40212 Düsseldorf (DE)**

(56) References cited:
| | |
|---|---|
| **WO-A1-2018/115175** | **WO-A1-95/29278** |
| **CN-A- 106 995 975** | **CN-A- 110 318 153** |
| **CN-A- 111 101 283** | **CN-U- 202 131 464** |
| **CN-U- 205 295 657** | **CN-U- 209 537 756** |
| **CN-U- 211 645 570** | **DE-A1- 2 707 001** |
| **GB-A- 2 136 026** | **GB-A- 2 239 211** |
| **JP-A- 2004 353 104** | **US-A- 4 841 749** |
| **US-A- 5 795 835** | |

## Description

## TECHNICAL FIELD

The present invention relates to a warp inserted warp knitted chain structure for knitted net, and a bale net wrap using the same. The bale net wrap is mainly used for bundling and packaging forage, straw and the like.

## BACKGROUND

The bale net wrap is a kind of knotless net, which is named for bundling straw and forage, and may also be referred to as a wrapping net. It is knitted by a warp knitting machine with high production efficiency. The bale net is characterized by large mesh, and has the functional requirement of a certain bearing strength.

Referring to FIG. 1, the specific structure of the existing baling net such as known from GB2239211A includes a plurality of warp chains 1 parallel along a warp direction. Each warp chain 1 consists of a plurality of groups of warp-knitted loop links 2 connected in series. Insertion wefts 3 are provided between two adjacent warp chains 1 along a weft direction to form a net structure. Because of the warp-knitted structure, there are looping structures between the loop links 2 in each warp chain 1 and between the insertion weft 3 and the loop link 2. Therefore, there is no knot in the whole net structure, forming a knotless mesh.

According to the bundling function of the baling net, it is required to have a certain strength along the wrap direction. In actual use, for the existing baling net and the baling nets involved in patents CN202131464U, CN206512385U and CN206376082U, the external force after bundling straw, forage and the like is mainly born by the warp chains 1. Therefore, in order to enhance the bearing capacity of the baling net, the bearing capacity of the warp chains 1 should be increased as much as possible.

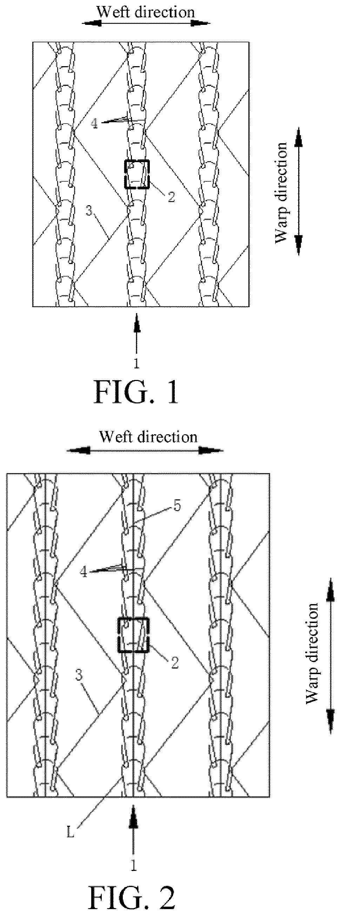

For each warp chain 1, it is formed by looping a bundle of looping fibers 4. The bundle of looping fibers 4 may be a single filament or formed by arranging and combining a plurality of filaments in parallel. After warp knitting (looping), loop links 2 (the structure in the dashed box in FIG. 1) are formed. The looping fibers 4 after looping are bent (as shown in FIG. 1), so that the strength is lower than that of the original plain and straight fiber. With the structure characteristics of the warp-knitted loop links, the fineness (tex) of each warp chain 1 is three times that of the bundle of looping fibers 4, but its strength is three times less than that of the bundle of looping fibers 4.

In order to improve the bearing capacity of each warp chain 1, two methods may be adopted. One is to improve the strength of each bundle of looping fibers 4. The other is to improve the toughness of looping fibers 4 and reduce the weakening of the strength of looping fibers 4 caused by bending into loops during warp knitting. In the prior art, the improvement of fiber strength has a certain technical bottleneck, and the weakening of fiber strength caused by looping during warp knitting cannot be avoided.

In the "baling net" disclosed in patent CN205295657U, knitted net yarns are warp-knitted to form net body wefts and net body warps. It further includes knitting insertion yarns, the direction of the knitting insertion yarns is the same as that of the net body wefts and/or net body warps, and the length of the net body warps and/or net body wefts is less than or equal to the length of the corresponding knitting insertion yarns. The purpose of providing the knitting insertion yarns is to use the knitting insertion yarns to adapt to the size of the bale after the net body is broken, so as to effectively realize the function of wrapping the bale again. By inserting the knitting insertion yarns in the directions of wefts and warps, the bale is prevented from scattering after the wefts and warps are broken. In the baling net involved in this application, there is no cooperation between the insertion yarns and the wefts or warps during wrapping, and the insertion yarns only work after the wefts or warps are broken. In fact, when the wefts or warps are broken, the insertion yarns need to be used to prevent the bale from scattering, which requires that the strength of the insertion yarns is higher than that of the wefts or warps, that is, insertion yarns with higher strength need to be used, so that it will inevitably and greatly increase the weight and production cost of the baling net. Obviously, it cannot solve the problem of weakened fiber strength caused by looping during warp knitting.

WO 2018/115175 A1 discloses a net comprising warp chains with support threads which serve to strengthen the warp chains.

As found in search, there is no technical solution at home and abroad to improve the overall structural strength of the baling net by reducing the weakening of the fiber strength caused by looping during warp knitting without increasing the strength of a single bundle of looping fibers.

WO95/29278A (Examples 3 to 5) discloses a warp-inserted warp-knitted chain structure for use as an embroidery yarn comprising - similar to US5795835 (Figures 2, 6, 7; claim 19) directed to a use as load bearing elements in earth retention systems - most of the structural features in common with the subject-matter according to appended claim 1, apart from the suitability for a baling net and a total tex of fibers of the warp-inserted warp knitted chain structure of 133,333 tex.

## SUMMARY

### 1. Technical problems to be resolved by the present invention

Aiming at solving the problem that the existing warp-knitted looped chain structure reduces the bearing capacity of the knitted chain of the baling net due to weakening of the fiber strength, the present invention is directed to provide a warp-inserted warp knitted chain structure for a knitted net and a baling net using the same. By adopting the technical solution of the present invention, the warp knitted chain structure is formed by combining two parts, i.e., a warp-knitted chain and an insertion warp plainly and straightly inserted into the warp-knitted chain, the warp-knitted chain is formed by serially connecting loop links formed through warp knitting of looping fibers, and the ratio of the tex (tex: grams per 1,000 metres of yarn; D (denier): grams per 9,000 metres of yarn) A of the looping fibers to the tex C of the insertion warp is less than or equal to 2.33. Compared with the existing warp-knitted looped chain structure, under the same knitted chain tex, the plain and straight insertion warp and the warp-knitted chain are used to jointly bear the load born by the warp chain, the insertion warp fibers do not have the problems of bending and weakened strength, and the strength of the knitted chain is improved, thus improving the overall strength of the baling net with the warp-inserted warp knitted chain structure.

## 2. Technical solutions

To achieve the foregoing objectives, the present invention provides the following technical solutions:

The warp-inserted warp knitted chain structure for a baling net provided by the present invention is formed by combining two parts, i.e., a warp-knitted chain and an insertion warp plainly and straightly inserted into the warp-knitted chain, the warp-knitted chain is formed by serially connecting loop links formed through warp knitting of looping fibers, the insertion warp is alternately threaded up and down in the loop links in the warp-knitted chain, wherein the tex of the warp-knitted chain is 3 times the tex A of the looping fibers, and the ratio of the tex A of the looping fibers to the tex C of the insertion warp is less than or equal to 2.33,

the total tex of fibers of the warp-inserted warp chain knitted chain structure is B=3A+C, the tex A of the looping fibers is not more than 0.2917B and the tex C of the insertion warp is not less than 0.125B, and

the total tex of fibers of the warp-inserted warp chain knitted chain structure is 133,333 tex, the tex A of the looping fibers (4) is not more than 38,889 tex and the tex C of the insertion warp (5) is not less than 16,667 tex.

Further, the insertion warp is a single fiber filament or is formed by combining two or more sub-insertion warp fiber filaments; and the looping fiber is a single fiber filament or is formed by combining two or more fiber filaments.

Further, connecting knots spaced along a length direction of warp chains are further provided between the warp-knitted chain and the insertion warp.

Further, the connecting knots are connecting loops formed through warp knitting between the insertion warp and the loop links of the warp-knitted chain.

Further, one connecting knot is provided in the warp-knitted chain at an interval of at least one loop link.

A baling net provided by the present invention includes a plurality of parallel warp chains and insertion wefts provided between two adjacent warp chains. All or part of the warp chains of the baling net have the warp-inserted warp knitted chain structure for knitted net.

Further, the insertion wefts are wavily connected to the loop links of two adjacent warp chains.

## 3. Beneficial effects

Compared with the existing known technology, the technical solutions provided in the present invention have the following remarkable effects:

(1) In the warp-inserted warp knitted chain structure for the knitted net and the baling net using the same provided by the present invention, the warp-inserted warp knitted chain structure is formed by combining two parts, i.e., a warp-knitted chain and an insertion warp plainly and straightly inserted into the warp-knitted chain, the warp-knitted chain is formed by serially connecting loop links formed through warp knitting of looping fibers, the tex of the warp-knitted chain is 3 times the tex A of the looping fibers, and the ratio of the tex A of the looping fibers to the tex C of the insertion warp is less than or equal to 2.33. Compared with the existing warp-knitted looped chain structure, under the same knitted chain tex, the plain and straight insertion warp and the warp-knitted chain are used to jointly bear the load born by the warp chain, the insertion warp does not have the problems of bending and weakened strength, and the strength of the knitted chain is improved, thus improving the overall strength of the baling net with the warp-inserted warp knitted chain structure.

(2) In the warp-inserted warp chain knitted chain structure for the knitted net and the baling net using the same provided by the present invention, the total tex of fibers of the warp-inserted warp chain knitted chain structure is B=3A+C, the tex A of the looping fibers is not more than 0.2917B and the tex C of the insertion warp is no less than 0.125B. By adopting this knitted chain design, the overall strength of the knitted chain is maximized by optimizing the ratio of the tex of the looping fibers to the tex of the insertion warp fibers under the condition that the fineness (tex) of the warp chain is constant.

(3) In the warp-inserted warp knitted chain structure for the knitted net and the baling net using the same provided by the present invention, connecting knots spaced along a length direction of warp chains are further provided between the warp-knitted chain and the insertion warp. The connecting knots are used to avoid the relative movement between the insertion warp and the loops in the warp direction, and thus improving the stability of the warp knitted chain and the baling net.

## BRIEF DESCRIPTION OF THE DRAWINGS

FIG. 1 illustrates a schematic structural diagram of an existing baling net.
FIG. 2 illustrates a schematic structural diagram of a warp-inserted warp knitted chain structure for knitted net and a baling net using the same according to the present invention.
FIG. 3 illustrates a schematic structural diagram of a warp-inserted warp knitted chain structure for knitted net and a baling net using the same according to the present invention (with connecting knots).
FIG. 4 illustrates a schematic partial structural diagram of a baling net with one insertion warp according to the present invention.
FIG. 5 illustrates a schematic diagram of a connecting relationship between loop links and insertion warps in the present invention.
FIG. 6 illustrates a schematic partial structural diagram of a baling net with two insertion warps according to the present invention.
FIG. 7 illustrates a schematic partial structural diagram of a baling net with three insertion warps according to the present invention.
FIG. 8 illustrates a schematic partial structural diagram of a baling net with one insertion warp and one connecting knot provided at an interval of one loop link according to the present invention.
FIG. 9 illustrates a schematic partial structural diagram of a baling net with one insertion warp and one connecting knot provided at an interval of two loop links according to the present invention.
FIG. 10 illustrates a schematic partial structural diagram of a baling net with one insertion warp and one connecting knot provided at an interval of three loop links according to the present invention.
FIG. 11 illustrates a schematic partial structural diagram of a baling net with two insertion warps and one connecting knot provided at an interval of one loop link according to the present invention.
FIG. 12 illustrates a schematic partial structural diagram of a baling net with two insertion warps and one connecting knot provided at an interval of two loop links according to the present invention.
FIG. 13 illustrates a schematic partial structural diagram of a baling net with two insertion warps and one connecting knot provided at an interval of three loop links according to the present invention.
FIG. 14 illustrates a schematic partial structural diagram of a baling net with three insertion warps and one connecting knot provided at an interval of one loop link according to the present invention.

FIG. 15 illustrates a schematic partial structural diagram of a baling net with three insertion warps and one connecting knot provided at an interval of two loop links according to the present invention.
FIG. 16 illustrates a schematic partial structural diagram of a baling net with three insertion warps and one connecting knot provided at an interval of three loop links according to the present invention.

Reference numerals in the schematic diagrams:
1: warp chain; L: warp-knitted chain; 2: loop link; 3: insertion weft; 4: looping fiber; 5: insertion warp; 5-1: first sub-insertion warp; 5-2: second sub-insertion warp; 5-3: third sub-insertion warp; 6: connecting knot.

## DETAILED DESCRIPTION

To further understand the content of the present invention, the present invention is described in detail with reference to the accompanying drawings.
With reference to FIG. 2, the present invention provides a warp-inserted warp knitted chain structure for knitted net, aiming at solving the technical problem of reducing the weakening of the fiber strength caused by looping during warp knitting, and constructing a baling net with a novel knitted chain structure. The warp-inserted warp knitted chain structure is formed by combining two parts, i.e., a warp-knitted chain L and an insertion warp 5 plainly and straightly inserted into the warp-knitted chain L. The warp-knitted chain L is formed by serially connecting loop links 2 formed through warp knitting of looping fibers 4. The tex of the warp-knitted chain L is 3 times the tex A of the looping fibers 4. The ratio of the tex A of the looping fibers 4 to the tex C of the insertion warp 5 is less than or equal to 2.33. The total tex of fibers of the warp-inserted warp chain knitted chain structure is $B=3A+C$, the tex A of the looping fibers 4 is not more than 0.2917B and the tex C of the insertion warp 5 is not less than 0.125B. By using the above knitted chain design, under the condition that the fineness (tex) of warp chains is constant, the overall strength of the knitted chain is maximized and the bearing strength of the warp-inserted warp chain is brought into full play by optimizing the ratio of the tex of the looping fibers to the tex of the insertion warp fibers. In the present invention, the warp-knitted chain L is formed by serially connecting open or closed loop links 2 formed through warp knitting of looping fibers 4; the insertion warp 5 may be a single fiber filament or may be formed by combining two or more sub-insertion warp fiber filaments; and the looping fiber 4 may be a single fiber filament or may be formed by combining two or more fiber filaments.
Compared with the existing warp-knitted looped chain structure, under the same knitted chain tex, the plain and straight insertion warp and the warp-knitted chain are used to jointly bear the load born by the warp chain, the insertion warp does not have the problems of bending and weakened strength, and the strength of the knitted chain is improved, thus improving the overall strength of the baling net with the warp-inserted warp knitted chain structure. The specific design process can be expressed as follows:

If the tex of each bundle of looping fibers 4 in the warp chain 1 of the existing baling net in FIG. 1 is A', then the total tex of fibers in each warp chain 1 is B=3A'. By using the invention concept of the present invention, the warp chain 1 in FIG. 1 is redesigned into the warp chain 1 in FIG. 2. The fibers of the redesigned warp chain 1 consist of two parts. One part is referred to as looping fibers 4 for forming loops 2, and the other part is referred to as insertion warp fibers, insertion warp 5 for short, and are not looped but are inserted into loop links 2 formed by the looping fibers 4. In the newly designed knitted baling net, the insertion warp fibers inserted into the loop links 2 are in a plain and straight state and are not bent, so that the strength of the insertion warp fibers in the warp chain 1 will not be weakened.

Referring to FIG. 2, the warp chain 1 in the present invention still has looping fibers 4. Compared with the prior art in FIG. 1, the insertion warp 5 is added to form the warp chain 1. In the weft direction of the knitted net, there are still insertion wefts 3 which are the same as that in the prior art, so as to form the overall structure of the knitted net.

It is assumed that the total tex of fibers of each warp chain 1 newly designed in FIG. 2 is still B=3A', The tex of a single bundle of looping fibers 4 is reduced to

$$A=\frac{1}{n}A'$$

, n is a positive number more than 1, and the total tex of warp-knitted chain L in each warp chain 1 is

$$\frac{3}{n}A'$$

. Since the total tex of fibers in each warp chain 1 is still B=3A', the remaining total tex is

$$C=3A'-\frac{3}{n}A'=\frac{3A'(n-1)}{n}$$

. Fibers with the remaining total tex C are inserted into the warpknitted chain L as the insertion warp 5, so that the warp knitted chain structure with the insertion warp structure of the present invention is formed.

In particular, when n=1, it is the knitted chain structure in the prior art shown in FIG. 1, which does not fall within the scope discussed in the present invention.

In particular, the insertion warp 5 with the remaining total tex of C may consist of m single sub-insertion warp fiber filaments, so the tex of a single sub-insertion warp fiber filament is

$$E=\frac{C}{m}$$,

, m is a positive integer more than or equal to 1. The insertion warp 5 shown in FIG. 2 belongs to the case m=1.

Further, for the general case that the total tex of fibers of a single warp chain 1 is B, it is assumed that the looping fiber 4 consists of n fibers. The tex of the fibers are A1, A2,... An respectively. n is a positive integer. The sum of A1, A2,... An is A, which is not more than 0.2917B. The insertion warp 5 consists of m sub-insertion warp fiber filaments. The fineness (tex) of the sub-insertion warp fibers are C1, C2,... Cm respectively. m is a positive integer. The sum of C1, C2,... Cm is C, which is not less than 0.125B. A/C should be less than or equal to 0.2917B/0.125B=2.33. In this way, it is ensured that the finer looping fibers 4 realize the structure of the warp-knitted chain L in the single warp chain 1. That is, fewer fibers need to be bent, and thus the strength of fewer fibers is weakened; and more fibers are used as the insertion warps 5, thus maximizing the total strength of the warp chains 1.

In the warp-inserted warp knitted chain structure for the knitted net provided by the present invention, the total tex of fibers of a single warp chain 1 is 133,33 tex, meaning grams per 1,000 meters of warp chain 1. Tex is a direct measure of linear density.. The tex A of the looping fiber 4 is not more than 38,889 tex, the total tex C of the insertion warp 5 is not less than 16,667 tex, and A/C should be less than or equal to 38,889/16,667=2.33, so as to ensure that the finer looping fibers 4 realize the structure of the warp-knitted chain L in the single warp chain 1. That is, fewer fibers need to be bent, and thus the strength of fewer fibers is weakened; and more fibers are used as the insertion warps, thus maximizing the total strength of the warp chains 1. The ratio of the tex of the looping fiber and the tex of the insertion warp fiber is especially suitable for the baling net, which takes into account the performance and costeffectiveness of the baling net.

Practice has proved that the A/C ratio less than or equal to 2.33 is a balance point between performance and price in the actual production process. When the A/C ratio becomes smaller and smaller, the economic benefit becomes greater and greater. Therefore, A/C less than or equal to 2.33 is a key technical point in the present invention.

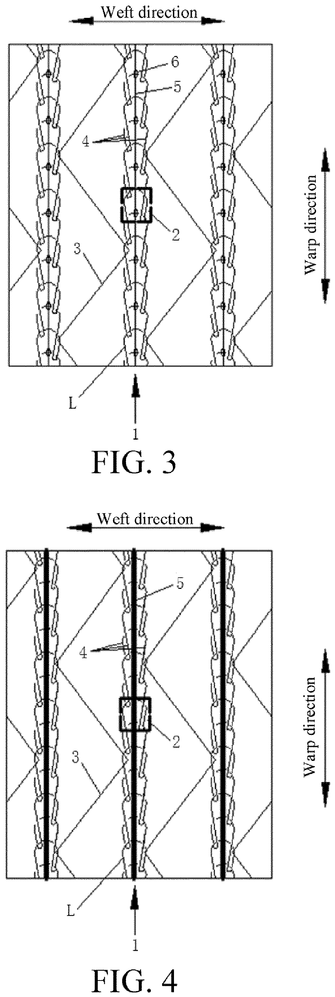

Further, in order to avoid the free movement of the insertion warp 5 in the warp chain 1 in FIG. 2 and increase the stability of the structure between the warp chain 1 and the insertion warp 5, connecting knots 6 spaced along a length direction of warp chains are further provided between the warp-knitted chain L and the insertion warp 5. The use of the connecting knots 6 avoids the relative movement between the insertion warp 5 and the loop links 2 in the warp direction, and improves the stability of the warp chain knitted chain and the baling net. Referring to FIG. 3, the connecting knots 6 are connecting loops formed between the insertion warp 5 and the loop links 2 of the warp-knitted chain L by adopting a warp knitting method. One connecting knot 6 is provided in the warp-knitted chain L at an interval of at least one loop link 2. The smaller the number of the loop links 2 spaced by the connecting knots 6 distributed in the warp direction, the larger the number of connecting knots 6, and the better the connection stability between the warp chain 1 and the insertion warp 5. However, the more times the insertion warp 5 is bent and knotted, the greater the material consumption of the insertion warp 5 and the worse the economic benefit. On the contrary, the connection stability between the warp chain 1 and the insertion warp 5 is worse. However, the fewer times the insertion warp 5 is bent and knotted, the smaller the material consumption of the insertion warp 5 and the better the economic benefit.

In the present invention, the plain and straight insertion warp 5 and the warp-knitted chain L jointly bear the load born by the warp chain 1. It should be understood that the "plain and straight" of the insertion warp 5 is relative to the bent knitted chain structure of the looping fibers 4. Appropriate bending formed by that the insertion structure of the insertion warp 5 in a direction perpendicular to the knitted net surface makes the insertion warp 5 alternately threaded up and down in the loop links 2 in the vertical direction also belongs to the scope of the meaning of "plain and straight" in the present invention.

The warp-inserted warp chain knitted chain structure for the knitted net provided by the present invention can be used for the knitted net with a common open or closed loop knitted chain structure. In the present invention, it is particularly applicable to the existing baling net shown in FIG. 1. For this purpose, the present invention further relates to a baling net with a novel knitted chain structure. The baling net includes a plurality of parallel warp chains 1 and insertion wefts 3 provided between every two warp chains 1. All or part of the warp chains 1 of the baling net have the warp-inserted warp chain knitted chain structure for the knitted net. The structure of the insertion wefts 3 is the same as that of the existing baling net. The insertion wefts 3 are wavily connected to the loop links 2 of two adjacent warp chains 1. Each warp chain 1 of the baling net can adopt the warp-inserted warp chain knitted chain structure for the knitted net, or the warp-inserted warp chain knitted chain structure for the knitted net can be adopted in the spaced warp chains 1 as required. The specific application is flexible according to the design needs. The present invention will be further described below in combination with the examples.

**[Example 1]**

FIG. 4 illustrates a partial structural diagram of a baling net with one insertion warp 5 in each warp chain 1. Reference numeral 1 represents the warp chain, reference numeral 2 represents a loop link, reference numeral 3 represents an insertion weft, reference numeral 4 represents a looping fiber, reference numeral 5 represents the insertion warp, and reference numeral L represents a warp-knitted chain. The warp chain 1 is characterized in that it consists of two parts. One part is the warp-knitted chain L formed by serially connecting the loop links 2 (one loop link is shown in the dashed box in FIG. 4), and the other part is the insertion warp 5 inserted into the warp-knitted chain L.

Referring to FIG. 4, the structure of the warp-knitted chain L consists of common warp-knitted open or closed loops. There are a plurality of groups of warp chains 1 in the entire baling net structure, which are parallel along the warp direction and are connected by the insertion wefts 3 to form the entire baling net structure.

At the positions of the insertion warps 5 in the warp direction, in each warp chain 1, one insertion warp 5 is continuously threaded in the warp-knitted chain L. Drawing the insertion warp 5 along the warp direction can realize movement relative to the warp-knitted chain L. At the positions of the insertion warps 5 in the weft direction, since the insertion warps 5 are threaded in the loop links 2 along the warp direction, the movement range of the insertion warps 5 in the weft direction does not exceed the area of the loop links 2.

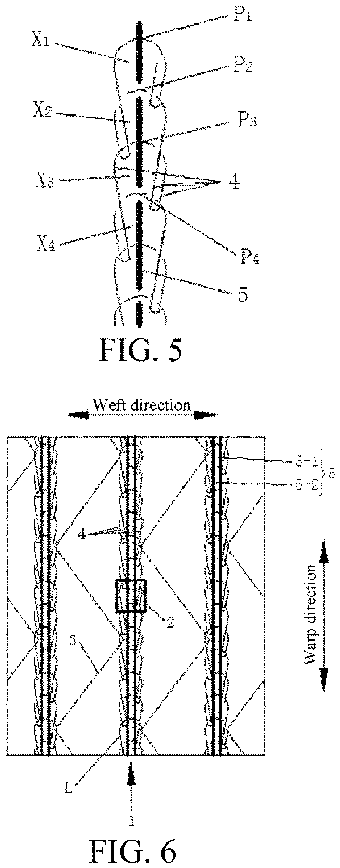

For the position relationship between the insertion warp 5 and the direction perpendicular to the surface of the baling net (hereinafter referred to as the vertical direction), four loop links $X_1$, $X_2$, $X_3$ and $X_4$ on one warp chain 1 are intercepted from FIG. 4, and the cross-over points with the insertion warp 5 are $P_1$, $P_2$, $P_3$ and $P_4$ respectively, as shown in FIG. 5. At the cross-over point $P_1$, the insertion warp 5 is located above the looping fiber 4 of the loop link $X_1$. At the cross-over point $P_2$, the insertion warp 5 is located below the looping fiber 4 of the loop link $X_2$. At the cross-over point $P_3$, the insertion warp 5 is located above the looping fiber 4 of the loop link $X_3$. At the cross-over point $P_4$, the insertion warp 5 is located below the looping fiber 4 of the loop link $X_4$. That is, on the whole warp chain 1, the insertion warp 5 and the looping fiber 4 are spaced and respectively alternated up and down, and the insertion warp 5 is limited in the loop link 2 in the vertical direction. Of course, the insertion warp 5 may also be inserted into the warp-knitted chain L alternately up and down at an interval of a plurality of loop links 2 as required.

For the fineness relationship between the looping fiber 4 and the insertion warp 5 fiber, the total tex of fibers of a single warp chain 1 is 133,333 tex, the tex A of the looping fiber 4 is less than or equal to 38,889 tex, the tex C of the insertion warp 5 is more than or equal to 16,667 tex, and the ratio of A to C, i.e., A/C, is less than or equal to 38,889/16,667=2.33. In this example, the tex of the insertion warp 5 in different warp chains 1 is equal, or the tex of the insertion warp 5 in different warp chains 1 is not equal, and the baling net structure thus formed is a proprietary structure in the present invention.

[Example 2]

FIG. 6 illustrates a partial structural diagram of a baling net with two insertion warps 5 in each warp chain 1. Reference numeral 1 represents the warp chain, reference numeral 2 represents a loop link, reference numeral 3 represents an insertion weft, reference numeral 4 represents a looping fiber, reference numeral 5 represents the insertion warp, reference numeral 5-1 represents a first sub-insertion warp, a reference numeral 5-2 represents a second sub-insertion warp, and reference numeral L represents a warp-knitted chain. The warp chain 1 also consists of two parts. One part is the warp-knitted chain L formed by serially connecting the loop links 2 (one loop link is shown in the dashed box in FIG. 6), and the other part is the insertion warp 5 inserted into the warp-knitted chain L. The insertion warp 5 includes the first sub-insertion warp 5-1 and the second sub-insertion warp 5-2.

Referring to FIG. 6, the structure of the warp-knitted chain L in this example is exactly the same as that of the warp-knitted chain L in Example 1. The insertion warp 5 consists of two fibers, which may also be referred to as sub-insertion warps. The first sub-insertion warp 5-1 and the second sub-insertion warp 5-2 replace the insertion warp 5 in Embodiment 1. The functions, fixing methods and the like of the first sub-insertion warp 5-1 and the second sub-insertion warp 5-2 are the same as those of the insertion warp 5 in Example 1.

In this example, for the fiber fineness relationship between the looping fiber 4 and the first sub-insertion warp 5-1 and the second sub-insertion warp 5-2, the total tex of fibers of a single warp chain 1 is 13,333 tex, the tex of the looping fiber 4 is A, A is less than or equal to 38,889 tex, the tex C1 of the first sub-insertion warp 5-1 and the tex C2 of the second sub-insertion warp 5-2 satisfy $C1+C2=13,333-3A$, and the sum of C1 and C2 is more than or equal to 16,667 tex, that is, $C1+C2 \geq 16,667$ tex, and the ratio of A to C1+C2 is less than or equal to 38,889/16,667=2.33, that is, $A/(C1+C2) \leq 38,889/16,667=2.33$.

For the relationship between the tex C1 of the first sub-insertion warp 5-1 and the tex C2 of the second sub-insertion warp 5-2, the tex C1 of the first sub-insertion warp 5-1 is equal to the tex C2 of the second sub-insertion warp 5-2, that is, the two sub-insertion warps are the same in fineness; or the tex C1 of the first sub-insertion warp 5-1 and the tex C2 of the second sub-insertion warp 5-2 are not equal, that is, the two sub-insertion warps are different in fineness. If the tex C1 of the first sub-insertion warp 5-1 and the tex C2 of the second sub-insertion warp 5-2 are not equal, the tex C1 and the tex C2 may be combined in any way, and the baling net structure thus formed by inserting the sub-insertion warps into the warp-knitted chain L is a proprietary structure of the baling net provided by the present invention.

For the tex C1 of the first sub-insertion warp 5-1 and the tex C2 of the second sub-insertion warp 5-2, the tex of the first sub-insertion warps 5-1 in different warp chains 1 is equal or not equal, and the tex of the second sub-insertion warps 5-2 in different warp chains 1 is equal or not equal, and the baling net structure thus formed is a proprietary structure of the baling net provided by the present invention.

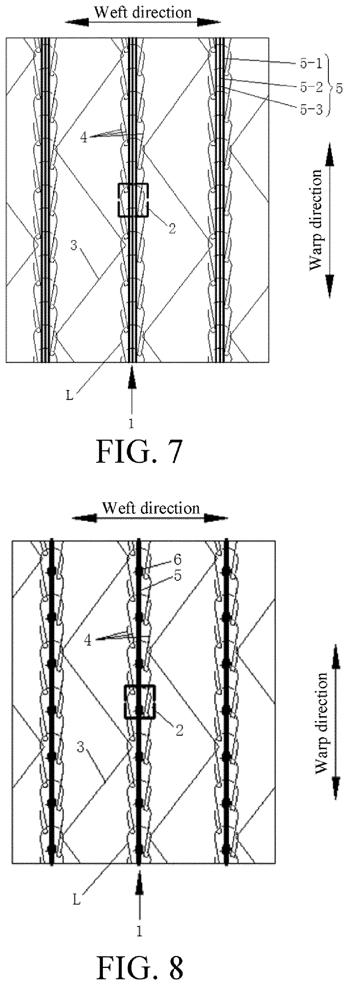

Furthermore, in addition to that the insertion warp 5 consists of two sub-insertion warps, the insertion warp 5 may consist of two or more sub-insertion warps. For example, referring to FIG. 7, the insertion warp 5 consists of three sub-insertion warps, that is, the insertion warp 5 consists of a first sub-insertion warp 5-1, a second sub-insertion warp 5-2 and a third sub-insertion warp 5-3. That is, the number $m$ of sub-insertion warps is a positive integer more than or equal to 1. The number of the sub-insertion warp m=1 is the case of Example 1 of the present invention, and the number of the sub-insertion warp m=2 is the case of Example 2 of the present invention. If the number $m$ of sub-insertion warps is more than or equal to 3, the baling net structure thus formed by inserting the sub-insertion warps into the warp-knitted chain L is also a proprietary structure of the baling net provided by the present invention.

In one warp-knitted chain L, the number $m$ of sub-insertion warps is more than or equal to 3, the tex of $m$ sub-insertion warps is the same or different, and the baling net structure thus formed by inserting the sub-insertion warps into one warp-knitted chain L is a proprietary structure of the baling net provided by the present invention.

For a plurality of parallel warp chains 1 forming the baling net structure, when the number $m$ of the sub-insertion warps is more than or equal to 3, the tex of $m$ sub-insertion warps in different warp chains 1 is equal, or the tex of $m$ sub-insertion warps in different warp chains 1 is not equal, and the baling net structure thus formed is a proprietary structure of the baling net provided by the present invention.

**[Example 3]**

FIG. 8 illustrates a partial structural diagram of a baling net with one insertion warp 5 in each warp chain 1 and with connecting knots 6 at an interval of a plurality of loop links in a warp direction. Reference numeral 1 represents the warp chain, reference numeral 2 represents a loop link, reference numeral 3 represents an insertion weft, reference numeral 4 represents a looping fiber, reference numeral 5 represents the insertion warp, reference numeral 6 represents a connecting knot and reference numeral L represents a warp-knitted chain. The warp chain 1 also consists of two parts. One part is the warp-knitted chain L formed by serially connecting the loop links 2 (one loop link is shown in the dashed box in FIG. 8), and the other part is the insertion warp 5 inserted into the warp-knitted chain L. The connecting knots 6 are between the insertion warp 5 and the loop links 2, so that the insertion warp 5 is bound with the loop links 2 at the connecting knots 6 to prevent the relative movement of the insertion warp 5 in the warp-knitted chain L.

Referring to FIG. 8, the structure of the warp-knitted chain L is exactly the same as that of the warp-knitted chain L in Example 1 and Example 2. The connecting knots 6 are connecting loops formed through warp knitting between the insertion warp 5 and the loop links 2.

Referring to FIG. 8, for the connecting knot 6 on one warp chain 1, there is one connecting knot 6 at an interval of one loop link 2, and the baling net structure thus formed is a proprietary structure of the baling net provided by the present invention.

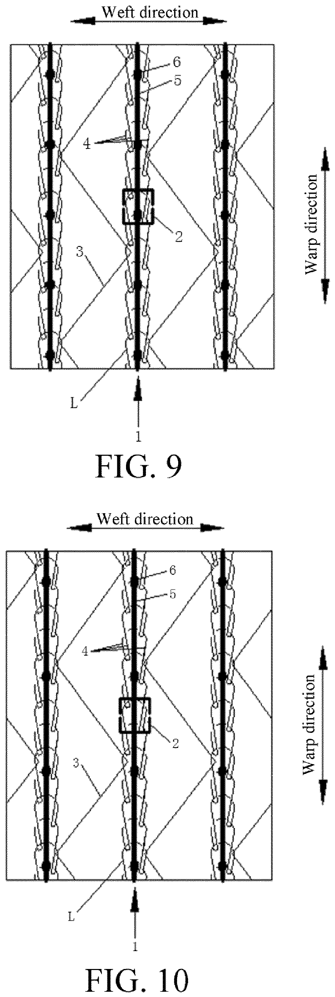

Referring to FIG. 9, for the connecting knot 6 on one warp chain 1, there is one connecting knot 6 at an interval of two loop links 2, and the baling net structure thus formed is a proprietary structure of the baling net provided by the present invention.

Referring to FIG. 10, for the connecting knot 6 on one warp chain 1, there is one connecting knot 6 at an interval of three loop links 2, and the baling net structure thus formed is a proprietary structure of the baling net provided by the present invention.

In addition, for the connecting knot 6 on one warp chain 1, there is one connecting knot 6 at an interval of more than three loop links 2, such as four, five, six..., and the baling net structure thus formed is a proprietary structure of the baling net provided by the present invention.

**[Example 4]**

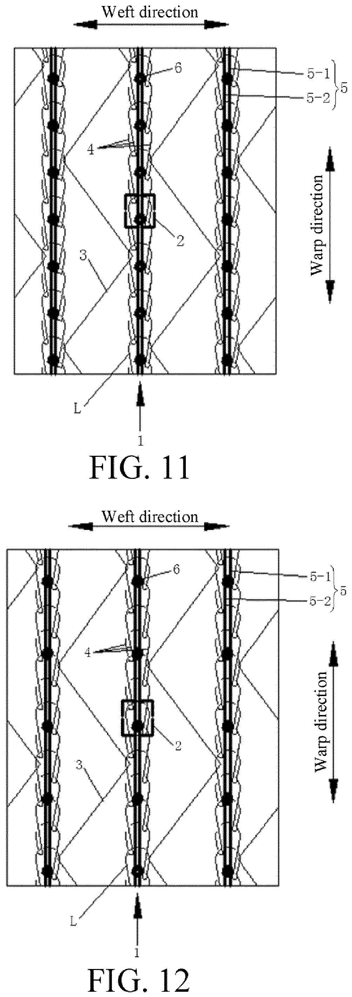

FIG. 11 illustrates a partial structural diagram of a baling net with two insertion warps 5 in each warp chain 1 and with connecting knots 6 at an interval of a plurality of loop links in a warp direction. Reference numeral 1 represents the warp chain, reference numeral 2 represents a loop link, reference numeral 3 represents an insertion weft, reference numeral 4 represents a looping fiber, reference numeral 5 represents the insertion warp, reference numeral 5-1 represents a first sub-insertion warp, reference numeral 5-2 represents a second sub-insertion warp, reference numeral 6 represents a connecting knot and reference numeral L represents a warp-knitted chain. The warp chain 1 also consists of two parts. One part is the warp-knitted chain L formed by serially connecting the loop links 2 (one loop link is shown in the dashed box in FIG. 11), and the other part is the insertion warp 5 inserted into the warp-knitted chain L. There are two sub-insertion warps. The connecting knots 6 are between the first sub-insertion warp 5-1 and the second sub-insertion warp 5-2 and the loop links 2, so that the first sub-insertion warp 5-1 and the second sub-insertion warp 5-2 are bound with the loop links 2 at the connecting knots 6 to prevent the relative movement of the first sub-insertion warp 5-1 and the second sub-insertion warp 5-2 in the warp-knitted chain L.

Referring to FIG. 11, the structure of the warp-knitted chain L is exactly the same as that of the warp-knitted chain L in Example 1 to Example 3. The insertion warp 5 consists of the first sub-insertion warp 5-1 and the second sub-insertion warp 5-2. The first sub-insertion warp 5-1 and the second sub-insertion warp 5-2 replace the insertion warp 5 in Example 3. The functions, fixing methods and the like of the first sub-insertion warp 5-1 and the second sub-insertion warp 5-2 in this example are the same as those of the insertion warp 5 in Example 3. The connecting knots 6 are connecting loops formed through warp knitting between the first sub-insertion warp 5-1 and the second sub-insertion warp 5-2 and the loop links 2.

Referring to FIG. 11, for the connecting knot 6 on one warp chain 1, there is one connecting knot 6 at an interval of one loop link 2 on the first sub-insertion warp 5-1 and the second sub-insertion warp 5-2, and the baling net structure thus formed is a proprietary structure of the baling net provided by the present invention.

Referring to FIG. 12, for the connecting knot 6 on one warp chain 1, there is one connecting knot 6 at an interval of two loop links 2 on the first sub-insertion warp 5-1 and the second sub-insertion warp 5-2, and the baling net structure thus formed is a proprietary structure of the baling net provided by the present invention.

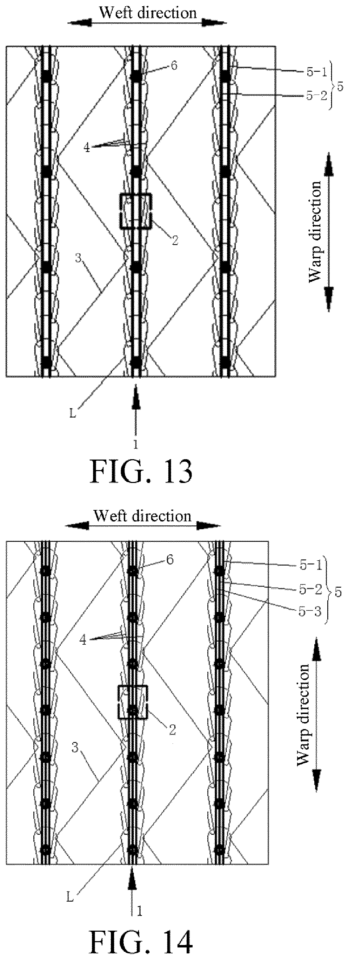

Referring to FIG. 13, for the connecting knot 6 on one warp chain 1, there is one connecting knot 6 at an interval of three loop links 2 on the first sub-insertion warp 5-1 and the second sub-insertion warp 5-2, and the baling net structure thus formed is a proprietary structure of the baling net provided by the present invention.

In addition, for the connecting knot 6 on one warp chain 1, there is one connecting knot 6 at an interval of more than three loop links 2 on the first sub-insertion warp 5-1 and the second sub-insertion warp 5-2, such as four, five, six..., and the baling net structure thus formed is a proprietary structure of the baling net provided by the present invention.

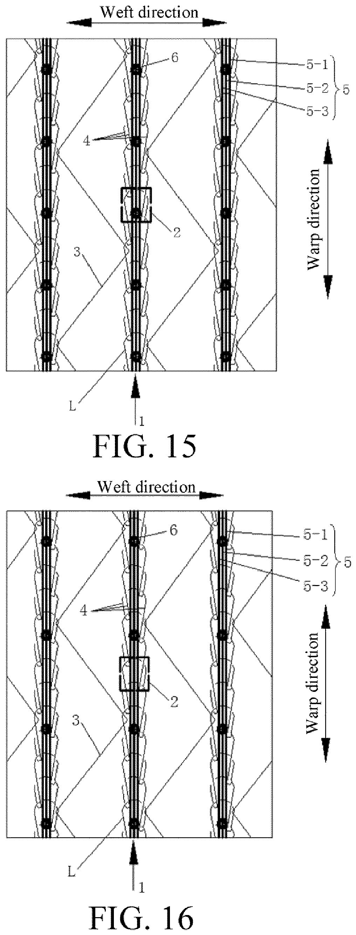

In the present invention, the insertion warp 5 in Example 4 may also consist of more than three, four, five... insertion warps in addition to two insertion warps. Referring to FIG. 14, the first sub-insertion warp 5-1, the second sub-insertion warp 5-2 and the third sub-insertion warp 5-3 form the insertion warp 5, and there is one connecting knot 6 at an interval of respectively one loop link 2 (see FIG. 14), two loop links 2 (see FIG. 15), three loop links 2 (see FIG. 16), and a plurality of, such as four, five, six...loop links 2. The structures with more than three sub-insertion warps and having an interval of more than three loop links 2 will not be enumerated one by one. All combinations of more than three sub-insertion warps and the interval of more than three loop links 2 still belong to the embodiments of the present invention, and the baling net structures thus formed are proprietary structures of the baling net provided by the present invention.

In the warp-inserted warp chain knitted chain structure for the knitted net and the baling net using the same provided by the present invention, the warp-inserted warp chain knitted chain structure is formed by combining two parts, i.e., a warp-knitted chain and an insertion warp plainly and straightly inserted into the warp-knitted chain, the warp-knitted chain is formed by serially connecting loop links formed through warp knitting of looping fibers, the tex of the warp-knitted chain is 3 times the tex A of the looping fibers, and the ratio of the tex A of the looping fibers to the tex C of the insertion warp is less than or equal to 2.33. Compared with the existing warp-knitted looped chain structure, under the same knitted chain tex, the plain and straight insertion warp and the warp-knitted chain are used to jointly bear the load born by the warp chain, the insertion warp does not have the problems of bending and weakened strength, and the strength of the knitted chain is improved, thus improving the overall strength of the baling net with the warp-inserted warp chain knitted chain structure. In addition, under the condition that the fineness (tex) of warp chains is certain, the overall strength of the knitted chain can be maximized to consider the performance and price of the baling net at the same time by optimizing the ratio of the tex of the looping fibers to the tex of the insertion warp fibers. Besides, the use of the connecting knots avoids the relative movement between the insertion warp and the loops in the warp direction, and improves the stability of the warp chain knitted chain and the baling net.

The terms "vertical", "horizontal", and "straight" and similar expressions used in this specification are merely used for the purpose of description. Unless otherwise defined, all technical and scientific terms used herein have the same meaning as commonly understood by a person skilled in the art to which the present invention belongs. The terms used in this specification are merely intended to describe objectives of the specific embodiments, but are not intended to limit the present invention.

The foregoing is merely a schematic description of the present invention and implementations thereof, and is not restrictive. The accompanying drawings only show one of the implementation of the present invention, and the actual structure is not limited thereto. Therefore, similar structures and embodiments designed by a person of ordinary skill in the art as inspired by the present invention herein without departing from the present invention and without creative efforts shall fall within the protection scope of the present invention.

## Claims

1. A warp-inserted warp knitted chain structure (1)

    for a baling net, wherein the warp-inserted warp knitted chain structure (1) is formed by combining two parts, i.e., a warp-knitted chain (L) and an insertion warp (5) inserted into the warp-knitted chain (L), the warp-knitted chain (L) is formed by serially connecting loop links (2) formed through warp knitting of looping fibers (4), the insertion warp (5) is alternately threaded up and down in the loop links (2) in the warp-knitted chain (L), **characterized in that**

the tex of the warp-knitted chain (L) is 3 times the tex A of the looping fibers (4), and the ratio of the tex A of the looping fibers (4) to the tex C of the insertion warp (5) is less than or equal to 2.33, the total tex of fibers of the warp-inserted warp knitted chain structure is B=3A+C. the tex A of the looping fibers (4) is not more than 0.2917B and the tex C of the insertion warp (5) is not less than 0.125B; and

the total tex of fibers of the warp-inserted warp knitted chain structure is 133,333 tex, the tex A of the looping fibers (4) is not more than 38,889 tex and the tex C of the insertion warp (5) is not less than 16,667 tex.

2. The warp-inserted warp knitted chain structure (1) according to claim 1, wherein the insertion warp (5) is a single fiber filament or is formed by combining two or more sub-insertion warp fiber filaments; the looping fiber (4) is a single fiber filament or is formed by combining two or more fiber filaments.

3. The warp-inserted warp knitted chain structure (1) according to any one of claims 1-2, wherein connecting knots (6) spaced along a length direction of warp chains are further provided between the warp-knitted chain (L) and the insertion warp (5).

4. The warp-inserted warp knitted chain structure (1) according to claim 3, wherein the connecting knots (6) are connecting loops formed through warp knitting between the insertion warp (5) and the loop links (2) of the warp-knitted chain (L).

5. The warp-inserted warp knitted chain structure (1) according to claim 4, wherein one connecting knot (6) is provided in the warp-knitted chain (L) at an interval of at least one loop link (2).

6. A baling net, comprising a plurality of parallel warp chains (1) and insertion wefts (3) provided between two adjacent warp chains (1), wherein all or part of the warp chains (1) of the baling net have the warp-inserted warp knitted chain structure (1) according to any one of claims 1-5.

7. The baling net according to claim 6, wherein the insertion wefts (3) are wavily connected to the loop links (2) of two adjacent warp chains (1).

## Patentansprüche

1. Gewirkte Kettenstruktur mit eingelegter Kette (1) für ein Ballennetz, wobei die gewirkte Kettenstruktur mit eingelegter Kette (1) durch Kombination von zwei Teilen gebildet wird, d.h., eine gewirkte Kette (L) und eine in die gewirkte Kette (L) eingelegte Einlegekette (5), wobei die gewirkte Kette (L) durch serielles Verbinden von Maschengliedern (2) gebildet wird, die durch Kettwirken von Maschenfasern (4) gebildet werden, wobei die Einlegekette (5) abwechselnd aufwärts und abwärts in die Maschenglieder (2) in der gewirkten Kette (L) eingefädelt wird, **dadurch gekennzeichnet, dass**

der Tex-Wert der gewirkten Kette (L) das Dreifache des Tex-Wertes A der Maschenfasern (4) beträgt und das Verhältnis des Tex-Wertes A der Maschenfasern (4) zum Tex-Wert C der Einlegekette (5) kleiner oder gleich 2,33 ist, der Gesamt-Tex-Wert der Fasern der gewirkten Kettenstruktur mit eingelegter Kette B=3A+C ist, der Tex-Wert A der Maschenfasern (4) nicht mehr als 0,2917B beträgt und der Tex-Wert C der Einlegekette (5) nicht weniger als 0,125B beträgt; und der Gesamt-Tex-Wert der Fasern der gewirkten Kettenstruktur mit eingelegter Kette 133333 tex beträgt, der Tex-Wert A der Maschenfasern (4) nicht mehr als 38889 tex beträgt und der Tex-Wert C der Einlegekette (5) nicht weniger als 16667 tex beträgt.

2. Gewirkte Kettenstruktur mit eingelegter Kette (1) nach Anspruch 1, wobei die Einlegekette (5) ein einzelnes Faserfilament ist oder durch Kombination von zwei oder mehr Unter-Einlegeketten-Faserfilamenten gebildet wird; die Maschenfaser (4) ein einzelnes Faserfilament ist oder durch Kombination von zwei oder mehr Faserfilamenten gebildet wird.

3. Gewirkte Kettenstruktur mit eingelegter Kette (1) nach einem der Ansprüche 1 bis 2, wobei zwischen der gewirkten Kette (L) und der Einlegekette (5) außerdem entlang der Längsrichtung der Ketten beabstandete Verbindungsknoten (6) vorgesehen sind.

4. Gewirkte Kettenstruktur mit eingelegter Kette (1) nach Anspruch 3, wobei die Verbindungsknoten (6) durch Kettwirken zwischen der Einlegekette (5) und den Maschengliedern (2) der gewirkten Kette (L) gebildete Verbindungsmaschen sind.

5. Gewirkte Kettenstruktur mit eingelegter Kette (1) nach Anspruch 4, wobei ein Verbindungsknoten (6) in der gewirkten Kette (L) in einem Intervall von mindestens einem Maschenglied (2) vorgesehen ist.

6. Ballennetz, umfassend eine Vielzahl von parallelen gewirkten Ketten (1) und Eintragsschüssen (3), die zwischen zwei benachbarten gewirkten Ketten (1) vorgesehen sind, wobei alle oder ein Teil der gewirkten Ketten (1) des Ballennetzes die gewirkte Kettenstruktur mit eingelegter Kette (1) nach einem der Ansprüche 1 bis 5 aufweisen.

7. Ballennetz nach Anspruch 6, wobei die Eintragsschüsse (3) wellenförmig mit den Maschengliedern (2) zweier benachbarter gewirkter Ketten (1) verbunden sind.

**Revendications**

1. Structure à chaîne tricotée à mailles jetées avec insertion en chaîne (1) pour un filet d'emballage, dans laquelle la structure à chaîne tricotée à mailles jetées avec insertion en chaîne (1) est formée en combinant deux parties, à savoir une chaîne tricotée à mailles jetées (L) et une chaîne d'insertion (5) insérée dans la chaîne tricotée à mailles jetées (L), la chaîne tricotée à mailles jetées (L) est formée par des maillons de boucle de connexion en série (2) formés par tricotage à mailles jetées de fibres en boucle (4), la chaîne d'insertion (5) est alternativement enfilée dans les maillons de boucle (2) de la chaîne tricotée à mailles jetées (L), **caractérisée en ce que**

le tex de la chaîne tricotée à mailles jetées (L) est 3 fois le tex A des fibres en boucle (4), et le rapport du tex A des fibres en boucle (4) au tex C de la chaîne d'insertion (5) est inférieur ou égal à 2,33, le tex total de fibres de la structure à chaîne tricotée à mailles jetées avec insertion en chaîne est B=3A+C, le tex A des fibres en boucle (4) n'est pas supérieur à 0,2917B et le tex C de la chaîne d'insertion (5) n'est pas inférieur à 0,125B ; et le tex total de fibres de la structure à chaîne tricotée à mailles jetées avec insertion en chaîne est de 133 333 tex, le tex A des fibres en boucle (4) n'est pas supérieur à 38 889 tex et le tex C de la chaîne d'insertion (5) n'est pas inférieur à 16 667 tex.

2. Structure à chaîne tricotée à mailles jetées avec insertion en chaîne (1) selon la revendication 1, dans laquelle la chaîne d'insertion (5) est un filament de fibre unique ou est formée en combinant deux ou plusieurs filaments de fibre de chaîne de sous-insertion ; la fibre en boucle (4) est un filament de fibre unique ou est formée en combinant deux ou plusieurs filaments de fibre.

3. Structure à chaîne tricotée à mailles jetées avec insertion en chaîne (1) selon l'une quelconque des revendications 1-2, dans laquelle des noeuds de connexion (6) espacés le long d'une direction de longueur de chaînes à mailles jetées sont en outre prévus entre la chaîne tricotée à mailles jetées (L) et la chaîne d'insertion (5).

4. Structure à chaîne tricotée à mailles jetées avec insertion en chaîne (1) selon la revendication 3, dans laquelle les noeuds de connexion (6) sont des boucles de connexion formées par tricotage à mailles jetées entre la chaîne d'insertion (5) et les maillons de boucle (2) de la chaîne tricotée à mailles jetées (L).

5. Structure à chaîne tricotée à mailles jetées avec insertion en chaîne (1) selon la revendication 4, dans laquelle un noeud de connexion (6) est prévu dans la chaîne tricotée à mailles jetées (L) à un intervalle d'au moins un maillon de boucle (2).

6. Filet d'emballage, comprenant une pluralité de chaînes à mailles jetées parallèles (1) et de trames d'insertion (3) prévues entre deux chaînes à mailles jetées adjacentes (1), dans lequel tout ou partie des chaînes à mailles jetées (1) du filet d'emballage ont la structure à chaîne tricotée à mailles jetées avec insertion en chaîne (1) selon l'une quelconque des revendications 1 à 5.

7. Filet d'emballage selon la revendication 6, dans lequel les trames d'insertion (3) sont reliées de manière ondulée aux maillons de boucle (2) de deux chaînes à mailles jetées adjacentes (1).

Weft direction

4

2

3

Warp direction

1

FIG. 1

Weft direction

5

4

2

3

Warp direction

L

1

FIG. 2

Weft direction

Warp direction

FIG. 3

Weft direction

Warp direction

FIG. 4

FIG. 5

FIG. 6

FIG. 7

FIG. 8

FIG. 9

FIG. 10

FIG. 11

FIG. 12

FIG. 13

FIG. 14

Weft direction

6

5-1
5-2  } 5
5-3

4

Warp direction

2

3

L

1

# FIG. 15

Weft direction

6

5-1
5-2  } 5
5-3

4

Warp direction

2

3

L

1

# FIG. 16

**EP 4 050 141 B1**

**REFERENCES CITED IN THE DESCRIPTION**

**Patent documents cited in the description**

- GB 2239211 A
- CN 202131464 U
- CN 206512385 U
- CN 206376082 U
- CN 205295657 U
- WO 2018115175 A1
- WO 9529278 A
- US 5795835 A